# EUROPEAN PATENT SPECIFICATION

(11) **EP 3 408 041 B1**
(45) Date of publication and mention of the grant of the patent: **07.06.2023**
(21) Application number: 17701468.5
(22) Date of filing: 24.01.2017
(51) Int. Cl.: B21D 41/02, B21D 39/20

(54) **TOOL DEVICE FOR EXPANDING THE END OF A TUBE**
WERKZEUGVORRICHTUNG ZUR AUSWEITUNG EINES ROHRENDES
OUTILLAGE POUR DILATER L'EXTRÉMITÉ D'UN TUBE

(30) Priority: 29.01.2016 FI 20165058
(43) Date of publication of application: 05.12.2018
(73) Proprietor: Uponor Innovation AB, 73061 Virsbo (SE)
(72) Inventor: ROTSO, Vesa, 15270 Kukkila (FI); SAVOLAINEN, Mika, 15700 Lahti (FI); LAAKSO, Jyri, 37600 Valkeakoski (FI); UOSUKAINEN, Mika, 15300 Lahti (FI)
(74) Representative: Papula Oy
(86) International application number: PCT/EP2017/051369
(87) International publication number: WO 2017/129540

(56) References cited:
- WO-A1-02/062504
- GB-A- 639 103
- JP-A- S58 173 035

## Description

### FIELD OF THE INVENTION

The present invention relates to a tool device for expanding the end of a tube.

### BACKGROUND OF THE INVENTION

In prior art, e.g. from WO02/062504, is known a tool device for expanding the end of a tube. The tool device comprises a power means to produce a pulling force. The tool device comprises a pull rod having a first end and a second end. The first end is connected to the power means, so that the power means can produce an axial motion of the pull rod between an extended position and a retracted position. The tool device further comprises a piston connected to the second end of the pull rod, the piston having a first diameter adapted to be inserted inside the tube, the piston having a first stop face. The tool device further comprises a body member having a guide channel through which the pull rod protrudes and is axially movable. The body member comprises a second stop face which is opposed to the first stop face and at a distance therefrom. The tool device further comprises an expansion sleeve element made of elastomeric material. The expansion sleeve element is arranged concentrically around the pull rod to extend in the area between the first stop face and the second stop face. The expansion sleeve element has a straight cylindrical shape with a second diameter, when the pull rod is in the extended position, and an expanded shape with a third diameter which is larger than the second diameter, when the pull rod is in the retracted position and the distance between the first stop face and second top face being shortened. The tool device further comprises a calibration sleeve, the calibration sleeve being arranged concentrically around the expansion sleeve element. The calibration sleeve comprises an inner die surface for giving a calibrated expanded form for the end of the tube while, in operation, the tube is pressed by the expanded expansion sleeve element against the die surface. GB 639103 A discloses a metal tube expander in which a plug of rubber inside the tube is compressed by means of a drawbolt to expand the tube and press the wall thereof against a surrounding die.

### OBJECTIVE OF THE INVENTION

The objective of the invention is to provide an improved tool device.

In particular, it is an objective of the present invention to provide a tool device in which the calibration sleeve can retain the tube firmly during the expanding operation, and after the tube end has been expanded the tool device enables easy releasing of the tube from the calibration sleeve.

### SUMMARY OF THE INVENTION

According to an aspect of the invention, the present invention provides a tool device for expanding the end of a tube, as defined in claim 1. The tool device comprises a power means to produce a pulling force. The tool device further comprises a pull rod having a first end and a second end, the first end being connected to the power means, so that the power means can produce an axial motion of the pull rod between an extended position and a retracted position. The tool device further comprises a piston connected to the second end of the pull rod, the piston having a first diameter adapted to be inserted inside the tube, the piston having a first stop face. The tool device further comprises a body member having a guide channel through which the pull rod protrudes and is axially movable, the body member comprising a second stop face which is opposed to the first stop face and at a distance therefrom. The tool device further comprises an expansion sleeve element made of elastomeric material, the expansion sleeve element being arranged concentrically around the pull rod and extend between the first stop face and the second stop face, the expansion sleeve element having a second diameter, when the pull rod is in the extended position, and an expanded shape with a third diameter which is larger than the second diameter, when the pull rod is in the retracted position and the distance between the first stop face and second top face being shortened. The tool device further comprises a calibration sleeve, the calibration sleeve being arranged concentrically around the expansion sleeve element, the calibration sleeve comprising an inner die surface for giving a calibrated expanded form for the end of the tube while the tube is pressed by the expanded expansion sleeve element against the die surface.

According to the invention the inner die surface of the calibration sleeve comprises a mouth portion which has a fourth diameter which corresponds with a play to the outer diameter of the tube. The calibration sleeve further comprises at least one expansion die portion having a fifth diameter, which is larger than the fourth diameter. The calibration sleeve further comprises a shoulder between the mouth portion and the expansion die portion which is next to the mouth portion. The shoulder keeps the end of the tube, while being expanded, stationary and firmly in place inside the calibration sleeve. The calibration sleeve comprises mutually openable and closable calibration sleeve parts which enable closing of the calibration sleeve to a closed position for the expanding operation of the end of the tube, and for opening of the calibration sleeve to an opened position for releasing the expanded end of the tube.

The technical effect of the invention is that, due to the shoulder formed in the inner die surface, the calibration sleeve retains the tube stationary in relation to the calibration sleeve so that no mutual slipping can occur during expansion of the expansion sleeve to press the tube end against the inner die surface of the calibration sleeve element. The pivotally openable calibration sleeve allows the tube end to be easily released from the grip of the calibration sleeve.

According to the invention the calibration sleeve comprises a first calibration sleeve part and a second calibration sleeve part, and a lock device for locking the calibration sleeve parts in a closed position. The number of the calibration sleeve parts is, however, not limited to two, but the calibration sleeve may consist of three, four or more parts.

According to the invention the expansion sleeve element has a first end and a second end. The first end is in abutment with and fixedly attached to the first stop face.

A cyclic compression and reversing of the expansion sleeve element which is repeated thousands of times can cause fatigue in the elastomeric material so that the expansion sleeve element does not reverse to its original length and diameter anymore.

According to the invention the second end of the expansion sleeve element is fixedly connected in relation to the second stop face, and that in the extended position of the pull rod the expansion sleeve element is in a stretched state under tensile stress. The technical effect of this alternative solution is that the expansion sleeve is forced to a predetermined original length and diameter in order to eliminate the abovementioned effect of fatigue of the elastomeric material.

In an embodiment of the tool device the second stop face has a frustoconical shape, the second stop face comprising a flat cap face surrounded by a conical slope surface. The technical effect is that the frustoconical shape controls the expansion of the expansion sleeve element by guiding "the flow" of elastomeric material during its expansion when it is compressed. Alternatively, the second stop face may have other shapes than frustoconical, e.g. flat, or the second stop face can include a groove.

In an embodiment of the tool device the flat cap face has a sixth diameter which corresponds to the second diameter of the expansion sleeve element.

In an embodiment of the tool device the first calibration sleeve part comprises a first pivot arm which is pivoted to be turnable about a pivot hinge axle, and the second calibration sleeve part comprises a second pivot arm which is pivoted to be turnable about the same pivot hinge axle as the first pivot arm, that the pivot hinge axle is at a distance from the center axis of the pull rod.

In an embodiment of the tool device the lock device comprises a latch pin which is guided movable between a locking position and a release position at the outer periphery of the first calibration sleeve part, the latch pin being spring-loaded by a pressure spring towards the locking position. The lock device further comprises a retaining notch at the outer periphery of the second calibration sleeve part. The retaining notch is arranged to receive and retain the latch pin in the locking position. The lock device further comprises a double-arm release lever pivoted about a pivot point to the first calibration sleeve part. The double-arm release lever comprises a first arm part, which is in connection with the latch pin, and a second arm part which is longer than the first arm part for grabbing by the operator and for turning the first arm part around the pivot point to move the latch pin to the release position against the spring force of the pressure spring.

In an embodiment of the tool device the expansion sleeve element is made of elastomeric material having hardness of 60 to 100 Shore A.

In an embodiment of the tool device the expansion sleeve element is made of thermoplastic polyurethane.

In an embodiment of the tool device the power means is a hydraulic cylinder to produce the movement of the pull rod.

In an embodiment of the tool device the tool device is a handheld tool device comprising a handle.

In an embodiment of the tool device the handle includes a rechargeable battery, a hydraulic pump to produce hydraulic pressure for the hydraulic cylinder, an electric motor for driving the hydraulic pump and an on-off switch which can be operated by the operator to control the operation of the tool device.

It is to be understood that the aspects and embodiments of the invention described above may be used in any combination with each other. Several of the aspects and embodiments may be combined together to form a further embodiment of the invention, without leaving the scope of the invention as defined by the claims.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 shows an axonometric view of the tool device according to one embodiment of the invention,
Figure 2 shows the tool device of Figure 1 from above and sectioned partially,
Figure 3 shows a partial cross-section of the tool device of Figure 1,
Figure 3a shows an alternative detail for the tool device of Figure 3,
Figure 4 shows the tool device of Figure 4 when the pull rod is in a retracted position the expansion sleeve element being in a compressed state and expanded to expand the end of the tube by pressing it against the calibration sleeve,
Figure 5 shows an axonometric view of the tool device of Figure 1 the calibration sleeve parts being in an opened position,
Figure 5a shows the expansion sleeve element of the tool device of Figure 5 being detached from the pull rod,
Figure 6 shows a front view of the tool device of Figure 1 sectioned partially, and
Figure 7 shows the tool device of Figure 6 the calibration sleeve parts being in an opened position.

### DETAILED DESCRIPTION OF THE INVENTION

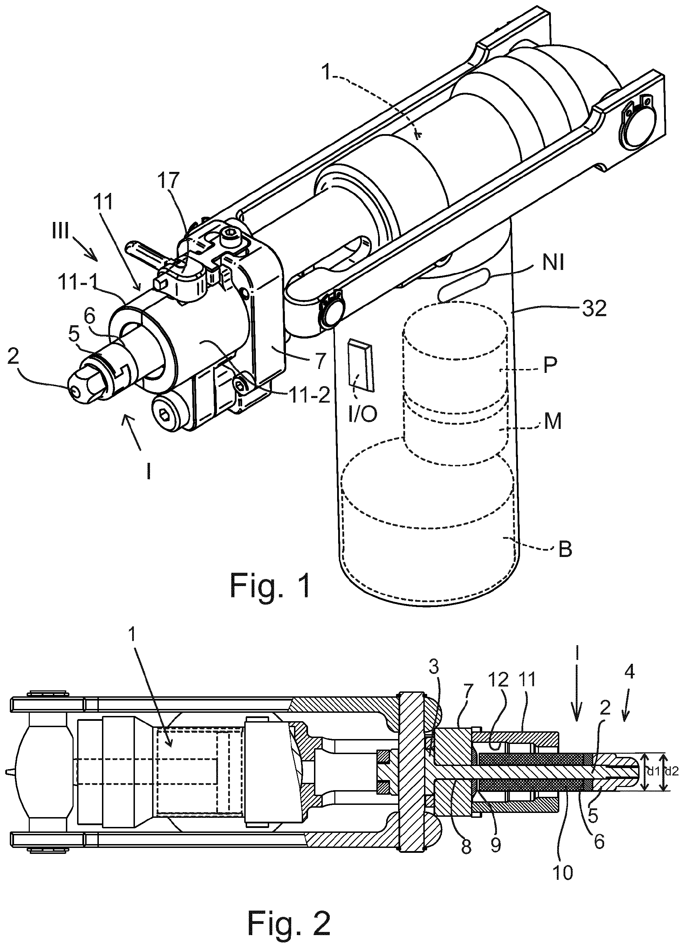

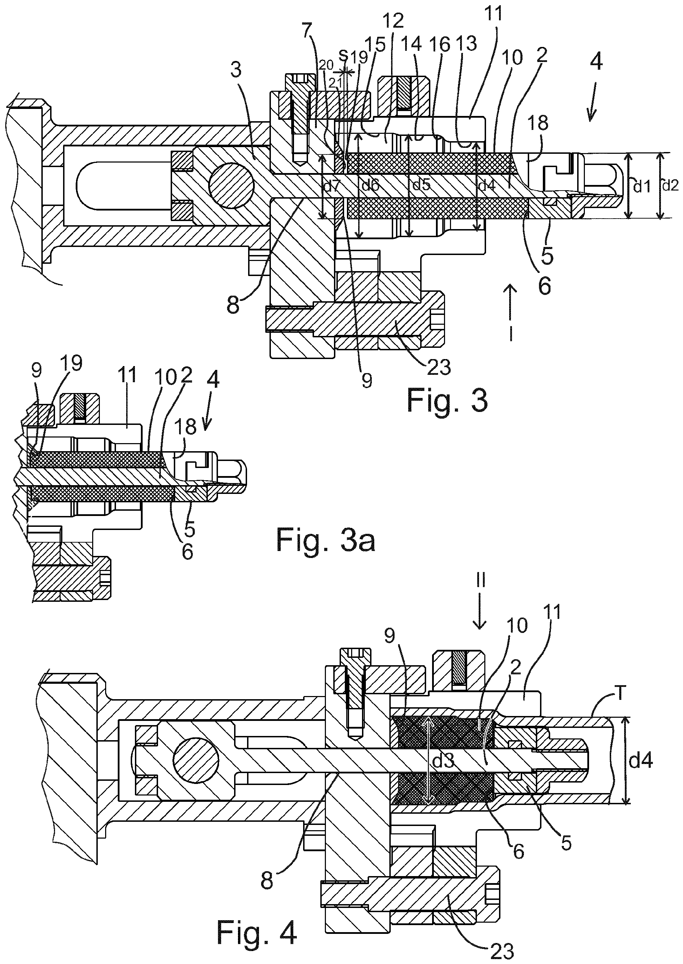

Figures 1 to 7 shows a tool device for expanding the end of a tube T (see Figure 4). The tool device is designed and especially suitable for expanding the ends of pipes used in plumbing applications, such as PEX pipes (crosslinked polyethylene pipes). PEX material has an active memory capacity, and seamless aluminium composite pipe. Seamless aluminium composite pipe is built up from two concentric plastic layers with an intermediate seamless layer of aluminium and all these three layers are attached to each other by adhesive layers. However, there are commercial composite pipes comprising layers of metal, plastic and adhesives between these layers. Most of these provided pipes have a seam in metal layer or are of the structure of where the metal layer overlaps and is then welded. These pipes are not suitable for expanding, because the seam may be defected when expanding. This defection of the seam may cause inconsistency in the pipe wall and thus cause leakages. The tool device is also suitable for expanding the ends of metal pipes, such as copper pipes.

By reference to Figure 1, the tool device is preferably a handheld power tool having a handle 32 by which the operator can hold the tool device by hand to perform the expansion operation. The tool device comprises a power means 1 to produce a pulling force. As shown in Figure 2, the power means 1 can be for example a hydraulic cylinder 1 whereby the handle 32 may contain equipment such as a rechargeable battery B, a hydraulic pump P to produce hydraulic pressure for the hydraulic cylinder 1, an electric motor M for driving the hydraulic pump P and an on-off switch I/O, which can be operated by the operator to control the operation of the tool device.

Although this example shows a hydraulic cylinder as a power means, it should be noted that any suitable power means can be used to produce the pulling action. The tool device may also have a number indicator NI which is visible to the operator and shows the number of working cycles and thereby indicates how many times the expansion sleeve has been compressed for its expansion. This may indicate when the change of the expansion sleeve element needs to be done.

The tool device comprises a pull rod 2 having a first end 3 and a second end 4. The first end 3 is connected to the power means 1, so that the power means 1 can produce a linear axial motion of the pull rod 2 between an extended position I (see Figures, 1-3 and 5) and a retracted position II (see Figure 4).

A piston 5 is connected to the second end 4 of the pull rod 2. Referring to Figures 2 and 3, the piston 5 has a first diameter d1 adapted to be inserted inside the tube the end of which is supposed to be expanded. The piston 5 has a first stop face 6.

The tool device further comprises a body member 7. As shown in Figures 2-4, the body member 7 has a guide channel 8 through which the pull rod 2 protrudes and is axially movable. The body member 7 comprises a second stop face 9 which is opposed to the first stop face 6 and at a distance therefrom.

An expansion sleeve element 10 made of elastomeric material is arranged concentrically around the pull rod 2. The expansion sleeve element 19 extends in the area between the first stop face 6 and the second stop face 9.

As shown in Figures 2 and 3, the expansion sleeve element 10is an axially symmetrical sleeve and has a straight cylindrical shape, although the shape of the expansion sleeve element is not limited to cylindrical; for example in some other not shown embodiment the expansion sleeve element can be conical. The expansion sleeve element has a second diameter d2, when the pull rod 2 is in the extended position I. As shown in Figure 4, in the compressed state the expansion sleeve element 10 has an expanded shape with a third diameter d3 which is larger than the second diameter, when the pull rod 2 is in the retracted position II, the distance between the first stop face 6 and second top face 9 being shortened.

A calibration sleeve 11 is arranged concentrically around the expansion sleeve element 10. The calibration sleeve 11 comprises an inner die surface 12 for giving a calibrated expanded form for the end of the tube T while the tube is pressed by the expanded expansion sleeve element 10 against the die surface 12, as shown in Figure 4.

With reference to Figure 3, the inner die surface 12 of the calibration sleeve 11 comprises a mouth portion 13 which has a fourth diameter d4 which corresponds with a play to the outer diameter of the tube T. The inner die surface 12 further comprises at least one expansion die portion 14, 15 having a fifth diameter d5, d6 which is larger than the fourth diameter d4 of the mouth portion 13. In this example there are two expansion die portions, i.e. a first expansion die portion 14 having the diameter d5 and a second expansion die portion 15 having the diameter d6. The expansion die portion(s) can have any desirable shape, i.e. it can be cylindrical or even barrel-shaped.

A shoulder 16 is a rounded transition area between the mouth portion 13 and the expansion die portion 14 which is next to the mouth portion 13. The shoulder 16 keeps the end of the tube T, while being expanded by the expansion sleeve, firmly and stationary in place inside the calibration sleeve 11 so that the tube T does not escape from inside the calibration sleeve.

As can be seen in Figures 1 and 5 - 7, the calibration sleeve 11 comprises mutually openable and closable calibration sleeve parts 11-1, 11-2 which are pivotally connected to the body member 7. The pivotal connection enables closing of the calibration sleeve parts to a closed position III for the expanding operation of the end of the tube, and for opening of the calibration sleeve parts to an opened position IV for releasing the expanded end of the tube T. The calibration sleeve 7 is split in the axial direction into two halves which are a first calibration sleeve part 11-1 and a second calibration sleeve part 11-2. A lock device 17 is arranged for locking the calibration sleeve parts 11-1 and 11-2 in a closed position.

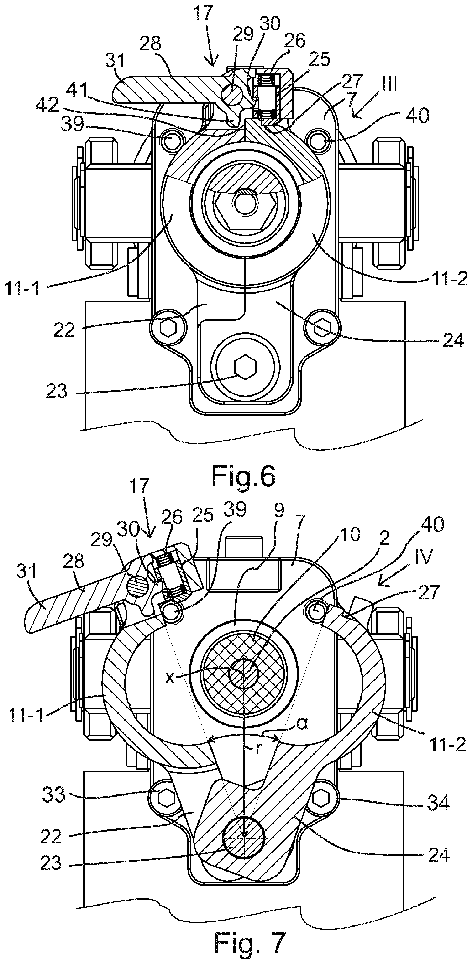

As can be seen in Figures 6 and 7, the first calibration sleeve part 11-1 comprises a first pivot arm 22. The first pivot arm 22 is pivoted to be turnable about a pivot hinge axle 23. The second calibration sleeve part 11-2 comprises a second pivot arm 24 which is pivoted to be turnable about the same pivot hinge axle 23 as the first pivot arm 22. The pivot hinge axle 23 is at a distance r from the center axis x of the pull rod 2. As can be seen in Figures 1, 3-5, the pivot hinge axle 23 is a bolt which is threaded to a bolt hole which is in the body member 7. The mutual opening angle α of the first pivot arm 22 and the second pivot arm 24 is limited to an acute angle by stop members 33 and 34. The first calibration sleeve part 11-1 and the second calibration sleeve part 11-2 are held in the opened position IV by retainers 39, 40 which come into contact with the calibration sleeve parts as they are opened towards the opened position IV. The retainers 39, 40 can be for example spring plungers which are threaded into threaded holes made in the body member 7.

As can be seen in Figures 6 and 7, the lock device 17 comprises a latch pin 25 which is guided movable between a locking position and a release position in a guide formed at the outer periphery of the first calibration sleeve part 11-1. The latch pin 25 is spring-loaded by a pressure spring 26 towards the locking position. A retaining notch 27 is formed at the outer periphery of the second calibration sleeve part 11-2. The retaining notch 27 is arranged to receive and retain the latch pin 25 in the locking position. A double-arm release lever 28 is pivoted about a pivot point 29 at the first calibration sleeve part 11-1. The double-arm release lever 28 comprises a first arm part 30, which is in connection with the latch pin 25, and a second arm part 31 which is longer than the first arm part 30. The double-arm release lever 28 also comprises a pushing cam 41 which is adapted to hit a counter surface 42 formed in the second calibration sleeve part 11-2. The operator can release the lock device 17 by grabbing the second arm part 31 with his fingers and press it downwards whereby the first arm part 30 turns about the pivot point 29 and lifts the latch pin 25 against the spring force of the pressure spring 26 out from contact to the retaining notch 27 to the release position. Simultaneously, the pushing cam 41 pushes the counter surface 42 and assists in separating of the calibration sleeve parts from each other.

Referring back to Figure 3, the expansion sleeve element 10 has a first end 18 and a second end 19, the first end 18 being in abutment with and fixedly attached to the first stop face 6. In the extended position I of the pull rod 2 the second end 19 of the expansion sleeve element 10 is at a distance from the second stop face 9, so that a clearance s is formed between the second end 19 and the second stop face 9.

Figure 3a shows an alternative solution, wherein the second end 19 of the expansion sleeve element 10 is fixedly connected in relation to the second stop face 9. In the extended position I of the pull rod 2 the expansion sleeve element 10 is in a stretched state under tensile stress.

As can be seen in Figures 3 and 4, the second stop face 9 has a frustoconical shape. The second stop face 9 comprises a flat cap face 20 surrounded by a conical slope surface 21. The flat cap face 20 has a sixth diameter d7 which corresponds to the second diameter d2 of the expansion sleeve element 10. The expansion sleeve element 10 is made of elastomeric material having hardness of 60 to 100 Shore A. The expansion sleeve element 10 is can e.g. be made of thermoplastic polyurethane.

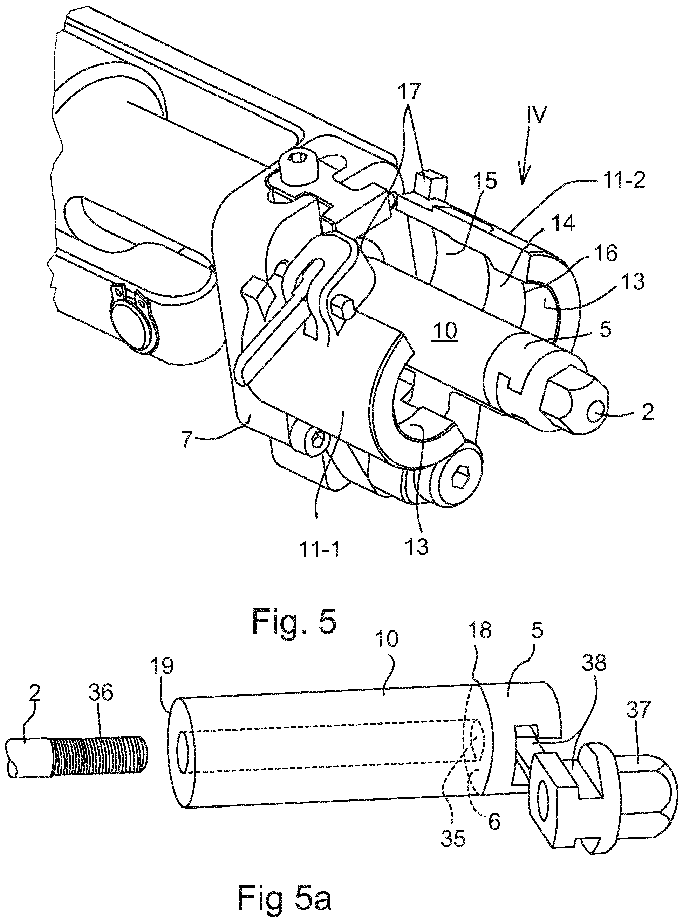

Figure 5a shows the expansion sleeve element 10 as detached from the pull rod 2. The expansion sleeve element 10 has a first end 18 and a second end 19. The first end 18 is in abutment with and fixedly attached to the first stop face 6 of the piston 5. The piston 5 is a piece made of metal or plastics and fixed by gluing or by overmolding to the first end 18 of the expansion sleeve element 10. Overmolding is an injection molding process where one material is molded onto a second material. When properly selected, the overmolded material will form a strong bond with the second material. The piston 5 has a central through-hole 35, through which the threaded end 36 of the pull rod 2 can protrude so that a nut 37 can be threaded to the threaded end 36. The piston 5 and the nut 37 are connected to each other by a sliding dovetailed joint 38 or like.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A tool device for expanding the end of a tube (T), the tool device comprising
- a power means (1) to produce a pulling force,
- a pull rod (2) having a first end (3) and a second end (4), the first end (3) being connected to the power means (1), so that the power means (1) can produce an axial motion of the pull rod (2) between an extended position (I) and a retracted position (II),
- a piston (5) connected to the second end (4) of the pull rod (2), the piston (5) having a first diameter (d1) adapted to be inserted inside the tube (T), the piston (5) having a first stop face (6),
- a body member (7) having a guide channel (8) through which the pull rod (2) protrudes and is axially movable, the body member (7) comprising a second stop face (9) which is opposed to the first stop face (6) and at a distance therefrom,
- an expansion sleeve element (10) made of elastomeric material, the expansion sleeve element being arranged concentrically around the pull rod (2) and extend between the first stop face (6) and the second stop face (9), the expansion sleeve element (10) having a second diameter (d2), when the pull rod (2) is in the extended position (I), and an expanded shape with a third diameter (d3) which is larger than the second diameter, when the pull rod (2) is in the retracted position (II) and the distance between the first stop face (6) and second top face (9) being shortened, and
- a calibration sleeve (11), the calibration sleeve (11) being arranged concentrically around the expansion sleeve element (10), the calibration sleeve (11) comprising an inner die surface (12) for giving a calibrated expanded form for the end of the tube (T) while the tube is pressed by the expanded expansion sleeve element (10) against the die surface (12), the inner die surface (12) of the calibration sleeve (11) comprises
- a mouth portion (13) which has a fourth diameter (d4) which corresponds with a play to the outer diameter of the tube (T),
- at least one expansion die portion (14, 15) having a fifth diameter (d5, d6) which is larger than the fourth diameter (d4), and
- a shoulder (16) between the mouth portion (13) and the expansion die portion (14) which is next to the mouth portion, whereby the shoulder (16) keeps the end of the tube (T), while being expanded, stationary in place inside the calibration sleeve (11); wherein the calibration sleeve (11) comprises mutually openable and closable calibration sleeve parts (11-1, 11-2) comprising a first calibration sleeve part (11-1) and a second calibration sleeve part (11-2) to enable closing of the calibration sleeve to a closed position (III) for the expanding operation of the end of the tube, and for opening of the calibration sleeve to an opened position (IV) for releasing the expanded end of the tube, and that the calibration sleeve (11) comprises a lock device (17) for locking the calibration sleeve parts (11-1, 11-2) in the closed position (III), and the expansion sleeve element (10) has a first end (18) and a second end (19), the first end (18) being in abutment with and fixedly attached to the first stop face (6), **characterized in that** the second end (19) of the expansion sleeve element (10) is fixedly connected in relation to the second stop face (9), and that in the extended position (I) of the pull rod (2) the expansion sleeve element (10) is in a stretched state under tensile stress.

2. The tool device according to claim 1, **characterized in that** the second stop face (9) has a frustoconical shape, the second stop face (9) comprising a flat cap face (20) surrounded by a conical slope surface (21).

3. The tool device according to claim 2, **characterized in that** the flat cap face (20) has a sixth diameter (d7) which corresponds to the second diameter (d2) of the expansion sleeve element (10).

4. The tool device according to any one of the claims 1 to 3, **characterized in that** the first calibration sleeve part (11-1) comprises a first pivot arm (22) which is pivoted to be turnable about a pivot hinge axle (23), and the second calibration sleeve part (11-2) comprises a second pivot arm (24) which is pivoted to be turnable about the same pivot hinge axle (23) as the first pivot arm, that the pivot hinge axle (23) is at a distance (r) from the center axis (x) of the pull rod (2) .

5. The tool device according to claim 4, **characterized in that** the lock device (17) comprises
- a latch pin (25) which is guided movable between a locking position and a release position at the outer periphery of the first calibration sleeve part (11-1), the latch pin (25) being spring-loaded by a pressure spring (26) towards the locking position,
- a retaining notch (27) at the outer periphery of the second calibration sleeve part (11-2), the retaining notch (27) being arranged to receive and retain the latch pin (25) in the locking position, and
- a double-arm release lever (28) pivoted about a pivot point (29) to the first calibration sleeve part (11-1), the double-arm release lever (28) comprising a first arm part (30), which is in connection with the latch pin (25), and a second arm part (31) which is longer than the first arm part (30) for grabbing by the operator and for turning the first arm part around the pivot point to move the latch pin to the release position against the spring force of the pressure spring (26).

6. The tool device according to any one of the claims 1 to 5, **characterized in that** the expansion sleeve element (10) is made of elastomeric material having hardness of 60 to 100 Shore A.

7. The tool device according to any one of the claims 1 to 6, **characterized in that** the expansion sleeve element (10) is made of thermoplastic polyurethane.

8. The tool device according to any one of the claims 1 to 7, **characterized in that** the power means (1) is a hydraulic cylinder to produce the movement of the pull rod (2).

9. The tool device according to any one of the claims 1 to 8, **characterized in that** the tool device is a handheld tool device comprising a handle (32).

10. The tool device according to claim 9, **characterized in that** the handle (32) includes a rechargeable battery (B), a hydraulic pump (P) to produce hydraulic pressure for the hydraulic cylinder (1), an electric motor (M) for driving the hydraulic pump and an on-off switch (I/O) which can be operated by the operator to control the operation of the tool device.

11. The tool device according to any one of the claims 1 to 10, **characterized in that** the expansion sleeve element (10) is changeable.

## Patentansprüche

1. Werkzeugvorrichtung zum Aufweiten des Endes eines Rohres (T), wobei die Werkzeugvorrichtung umfasst
- ein Antriebsmittel (1) zur Erzeugung einer Zugkraft,
- eine Zugstange (2) mit einem ersten Ende (3) und einem zweiten Ende (4), wobei das erste Ende (3) mit dem Antriebsmittel (1) verbunden ist, so dass das Antriebsmittel (1) eine axiale Bewegung der Zugstange (2) zwischen einer ausgefahrenen Position (I) und einer eingefahrenen Position (II) erzeugen kann,
- einem Kolben (5), der mit dem zweiten Ende (4) der Zugstange (2) verbunden ist, wobei der Kolben (5) einen ersten Durchmesser (dl) aufweist, der geeignet ist, in das Innere des Rohrs (T) eingeführt zu werden, wobei der Kolben (5) eine erste Anschlagfläche (6) aufweist,
- ein Körperelement (7), das einen Führungskanal (8) aufweist, durch den die Zugstange (2) vorsteht und axial beweglich ist, wobei das Körperelement (7) eine zweite Anschlagfläche (9) aufweist, die der ersten Anschlagfläche (6) gegenüberliegt und von dieser beabstandet ist,
- ein Spreizhülsenelement (10) aus elastomerem Material, wobei das Spreizhülsenelement konzentrisch um die Zugstange (2) angeordnet ist und sich zwischen der ersten Anschlagfläche (6) und der zweiten Anschlagfläche (9) erstreckt, wobei das Spreizhülsenelement (10) einen zweiten Durchmesser (d2) aufweist, wenn sich die Zugstange (2) in der ausgefahrenen Position (I) befindet, und eine aufgeweitete Form mit einem dritten Durchmesser (d3), der größer ist als der zweite Durchmesser, wenn sich die Zugstange (2) in der eingefahrenen Position (II) befindet und der Abstand zwischen der ersten Anschlagfläche (6) und der zweiten Anschlagfläche (9) verkürzt ist, und
- eine Kalibrierhülse (11), wobei die Kalibrierhülse (11) konzentrisch um das Spreizhülsenelement (10) angeordnet ist, wobei die Kalibrierhülse (11) eine innere Matrizenfläche (12) aufweist, um eine kalibrierte aufgeweitete Form für das Ende des Rohrs (T) zu erhalten, während das Rohr durch das aufgeweitete Spreizhülsenelement (10) gegen die Matrizenfläche (12) gepresst wird, wobei die innere Matrizenfläche (12) der Kalibrierhülse (11) aufweist
- einen Mündungsabschnitt (13), der einen vierten Durchmesser (d4) aufweist, der mit einem Spiel dem Außendurchmesser des Rohrs (T) entspricht,
- mindestens einen Spreizmatrizenabschnitt (14, 15) mit einem fünften Durchmesser (d5, d6), der größer ist als der vierte Durchmesser (d4), und
- eine Schulter (16) zwischen dem Mündungsabschnitt (13) und dem Aufweitungsmatrizenabschnitt (14), der sich neben dem Mündungsabschnitt befindet, wobei die Schulter (16) das Ende des Rohrs (T), während es aufgeweitet wird, stationär in der Kalibrierhülse (11) hält; wobei die Kalibrierhülse (11) gegenseitig zu öffnende und zu schließende Kalibrierhülsenteile (11-1, 11-2) umfasst, die ein erstes Kalibrierhülsenteil (11-1) und ein zweites Kalibrierhülsenteil (11-2) umfassen, um das Schließen der Kalibrierhülse in eine geschlossene Position (III) für den Aufweitungsvorgang des Rohrendes und das Öffnen der Kalibrierhülse in eine geöffnete Position (IV) zum Freigeben des aufgeweiteten Rohrendes zu ermöglichen, und dass die Kalibrierhülse (11) eine Verriegelungsvorrichtung (17) zum Verriegeln der Kalibrierhülsenteile (11-1, 11-2) in der geschlossenen Position (III) umfasst, und das Spreizhülsenelement (10) ein erstes Ende (18) und ein zweites Ende (19) aufweist, wobei das erste Ende (18) an der ersten Anschlagfläche (6) anliegt und fest mit dieser verbunden ist, **dadurch gekennzeichnet, dass** das zweite Ende (19) des Spreizhülsenelements (10) fest mit der zweiten Anschlagfläche (9) verbunden ist, und dass sich das Spreizhülsenelement (10) in der ausgefahrenen Position (I) der Zugstange (2) in einem gestreckten Zustand unter Zugspannung befindet.

2. Werkzeugvorrichtung nach Anspruch 1, **dadurch**
**gekennzeichnet, dass** die zweite Anschlagfläche (9) eine kegelstumpfförmige Form hat, wobei die zweite Anschlagfläche (9) eine flache Kappenfläche (20) umfasst, die von einer konischen Schrägfläche (21) umgeben ist.

3. Werkzeugvorrichtung nach Anspruch 2,
**dadurch gekennzeichnet, dass** die ebene Kappenfläche (20) einen sechsten Durchmesser (d7) aufweist, der dem zweiten Durchmesser (d2) des Spreizhülsenelements (10) entspricht.

4. Werkzeugvorrichtung nach einem der Ansprüche 1 bis 3, **dadurch gekennzeichnet, dass** das erste Kalibrierhülsenteil (11-1) einen ersten Schwenkarm (22) aufweist, der um eine Schwenkgelenkachse (23) drehbar gelagert ist, und das zweite Kalibrierhülsenteil (11-2) einen zweiten Schwenkarm (24) aufweist, der um die gleiche Schwenkgelenkachse (23) wie der erste Schwenkarm drehbar gelagert ist, dass die Schwenkgelenkachse (23) einen Abstand (r) von der Mittelachse (x) der Zugstange (2) aufweist.

5. Werkzeugvorrichtung nach Anspruch 4, **dadurch gekennzeichnet, dass** die Verriegelungsvorrichtung (17) umfasst
- einen Rastbolzen (25), der am Außenumfang des ersten Kalibrierhülsenteils (11-1) zwischen einer Verriegelungsstellung und einer Freigabestellung beweglich geführt ist, wobei der Rastbolzen (25) durch eine Druckfeder (26) in Richtung der Verriegelungsstellung federbelastet ist,
- eine Haltekerbe (27) am Außenumfang des zweiten Kalibrierhülsenteils (11-2), wobei die Haltekerbe (27) so angeordnet ist, dass sie den Verriegelungsstift (25) aufnimmt und in der Verriegelungsposition hält, und
- einen zweiarmigen Freigabehebel (28), der um einen Drehpunkt (29) an dem ersten Kalibrierhülsenteil (11-1) angelenkt ist, wobei der zweiarmige Freigabehebel (28) einen ersten Armteil (30), der mit dem Verriegelungsstift (25) in Verbindung steht, und einen zweiten Armteil (31), der länger als der erste Armteil (30) ist, zum Ergreifen durch den Bediener und zum Drehen des ersten Armteils um den Drehpunkt, um den Verriegelungsstift gegen die Federkraft der Druckfeder (26) in die Freigabeposition zu bewegen, umfasst.

6. Werkzeugvorrichtung nach einem der Ansprüche 1 bis 5, **dadurch gekennzeichnet, dass** das Spreizhülsenelement (10) aus elastomerem Material mit einer Härte von 60 bis 100 Shore A besteht.

7. Werkzeugvorrichtung nach einem der Ansprüche 1 bis 6, **dadurch gekennzeichnet, dass** das Spreizhülsenelement (10) aus thermoplastischem Polyurethan hergestellt ist.

8. Werkzeugvorrichtung nach einem der Ansprüche 1 bis 7, **dadurch gekennzeichnet, dass** das Antriebsmittel (1) ein Hydraulikzylinder ist, um die Bewegung der Zugstange (2) zu erzeugen.

9. Werkzeugvorrichtung nach einem der Ansprüche 1 bis 8, **dadurch gekennzeichnet, dass** die Werkzeugvorrichtung eine handgeführte Werkzeugvorrichtung mit einem Handgriff (32) ist.

10. Werkzeugvorrichtung nach Anspruch 9, **dadurch gekennzeichnet, dass** der Griff (32) eine wiederaufladbare Batterie (B), eine Hydraulikpumpe (P) zur Erzeugung von Hydraulikdruck für den Hydraulikzylinder (1), einen Elektromotor (M) zum Antrieb der Hydraulikpumpe und einen Ein-Aus-Schalter (I/O) umfasst, der vom Bediener zur Steuerung des Betriebs der Werkzeugvorrichtung betätigt werden kann.

11. Werkzeugvorrichtung nach einem der Ansprüche 1 bis 10, **dadurch gekennzeichnet, dass** das Spreizhülsenelement (10) austauschbar ist.

## Revendications

1. Outillage pour dilater l'extrémité d'un tube (T), l'outillage comprenant
- un moyen d'entraînement (1) pour produire une force de traction,
- une tige de traction (2) ayant une première extrémité (3) et une seconde extrémité (4), la première extrémité (3) étant reliée au moyen d'entraînement (1) de manière que celui-ci peut produire un mouvement axial de la tige de traction (2) entre une position déployée (I) et une position rétractée (II),
- un piston (5) relié à la seconde extrémité (4) de la tige de traction (2) le piston (5) ayant un premier diamètre (d1) adapté à être inséré à l'intérieur du tube T, le piston (5) ayant une première surface de butée (6),
- un élément de corps (7) ayant un canal de guidage (8) à travers lequel la tige de traction (2) fait saillie et est axialement mobile, l'élément de corps (7) comprenant une seconde surface de butée (9) qui est opposée à la première surface de butée (6) et à distance de celle-ci,
- un élément de manchon de dilatation (10) fait en matière élastomère, l'élément de manchon de dilatation étant agencé concentriquement autour de la tige de traction (2) et étendu entre la première surface de butée (6) et la seconde surface de butée (9), l'élément de manchon de dilatation (10) ayant un second diamètre (d2), lorsque la tige de traction (2) est en position étendue (I) et une forme dilatée avec un troisième diamètre (d3) qui est plus grand que le second diamètre lorsque la tige de traction (2) est en position rétractée (II) et la distance entre la première surface de butée (6) et la seconde surface de butée (9) étant raccourcie, et
- un manchon d'étalonnage (11), le manchon d'étalonnage (11) étant agencé concentriquement autour de l'élément de manchon de dilatation (10), le manchon d'étalonnage (11) comprenant une surface de matrice interne (12) pour donner une forme dilatée étalonnée pour l'extrémité du tube (T) pendant que le tube est pressé par l'élément de manchon de dilatation dilaté (10) contre la surface de matrice interne (12), la surface de matrice interne (12) du manchon d'étalonnage (11) comprend
- une partie embouchure (13) qui a un quatrième diamètre (d4) qui correspond avec un jeu au diamètre externe du tube (T),
- au moins une portion de matrice de dilatation (14, 15) ayant un cinquième diamètre (d5, d6) qui est supérieur au quatrième diamètre (d4), et
- un épaulement (16) entre la partie embouchure (13) et la portion de matrice de dilatation (14) qui est près de la partie embouchure, ainsi l'épaulement (16) maintient l'extrémité du tube (T), pendant que celle-ci est dilatée, de manière stationnaire, en place à l'intérieur du manchon d'étalonnage (11), le manchon d'étalonnage (11) comprenant des parties de manchon d'étalonnage pouvant être ouvertes et fermées (11-1, 11-2) qui comprennent une première partie de manchon d'étalonnage (11-1) et une seconde partie de manchon d'étalonnage (11-2) pour permettre la fermeture du manchon d'étalonnage en une position fermée (III) pour l'opération de dilatation de l'extrémité du tube, et pour l'ouverture du manchon d'étalonnage vers une position ouverte (IV) pour la libération de l'extrémité dilatée du tube, et en ce que le manchon d'étalonnage (11) comprend un dispositif de verrouillage (17) pour verrouiller les parties de manchon d'étalonnage (11-1, 11-2) en position fermée (III) et l'élément de manchon de dilatation (10) a une première extrémité (18) et une seconde extrémité (19), la première extrémité (18) étant en butée avec et attachée de manière fixe à la première surface de butée (6), car a c t é r i s é en ce que la seconde extrémité (19) de l'élément de manchon de dilatation (10) est reliée de manière fixe par rapport à la seconde surface de butée (9) et en ce qu'en position étendue (I) de la tige de traction (2) l'élément de manchon de dilatation (10) est en un état tendu sous contrainte de traction.

2. Outillage suivant la revendication 1, **caractérisé en ce que** la seconde surface de butée (9) a une forme tronconique, la seconde surface de butée (9) comprenant une face de couvercle plate (20) entourée par une surface tronconique inclinée (21).

3. Outillage suivant la revendication 2, **caractérisé en ce que** la face de couvercle plate (20) présente un sixième diamètre (d7) qui correspond au second diamètre (d2) de l'élément de manchon de dilatation (10).

4. Outillage suivant une des revendications 1 à 3, **caractérisé en ce que** la première partie de manchon d'étalonnage (11-1) comprend un premier bras pivotant (22) qui est pivoté pour pouvoir tourner autour d'un axe de charnière pivotante (23) et la seconde partie de manchon d'étalonnage (11-2) comprend un second bras pivotant (24) qui est pivoté pour pouvoir tourner autour du même axe de charnière pivotante (23) que le premier bras pivotant, **en ce que** l'axe de charnière pivotante (23) se situe à une distance (r) par rapport à l'axe central (x) de la tige de traction (2).

5. Outillage suivant la revendication 4, **caractérisé en ce que** le dispositif de verrouillage (17) comprend
- une goupille de verrouillage (25) qui est guidée mobile entre une position de verrouillage et une position de libération à la périphérie externe de la première partie de manchon d'étalonnage (11-1), la goupille de verrouillage (25) étant chargée par un ressort de pression (26) vers la position de verrouillage,
- une encoche de retenue (27) à la périphérie externe de la seconde partie de manchon d'étalonnage (11-2), l'encoche de retenue (27) étant agencée de manière à recevoir et retenir la goupille de verrouillage (25) dans la position de verrouillage, et
- un levier de libération à deux bras (28) pivoté autour d'un point de pivot (29) vers la première partie de manchon d'étalonnage (11-1), le levier de libération à deux bras (28) comprenant une première partie de bras (30) qui est reliée à la goupille de verrouillage (25) et une seconde partie de bras (31) qui est plus longue que la première partie de bras (30) pour pouvoir être saisie par l'opérateur et pour tourner la première partie de bras autour du point pivot pour déplacer la goupille de verrouillage à la position de libération contre la force du ressort de pression (26).

6. Outillage suivant une des revendications 1 à 5, **caractérisé en ce que** l'élément de manchon de dilation (10) est fait en un matériau élastomère présentant une dureté de 60 à 100 Shore A.

7. Outillage suivant une des revendications 1 à 6, **caractérisé en ce que** l'élément de manchon de dilatation (10) est fait en polyuréthane thermoplastique.

8. Outillage suivant une des revendications 1 à 7, **caractérisé en ce que** le moyen d'entraînement (1) est un cylindre hydraulique pour produire le mouvement de la tige de traction (2).

9. Outillage suivant une des revendications 1 à 8, **caractérisé en ce que** l'outillage est un outillage portable comprenant une poignée (32).

10. Outillage suivant la revendication 9, **caractérisé en ce que** la poignée (32) inclut une batterie rechargeable (B), une pompe hydraulique (P) pour produire la pression hydraulique pour le cylindre hydraulique (1), un moteur électrique (M) pour entraîner la pompe hydraulique et un interrupteur on-off (I/O) qui peut être actionné par l'opérateur pour commander le fonctionnement de l'outillage.

11. Outillage suivant une des revendications 1 à 10, **caractérisé en ce que** l'élément de manchon de dilatation (10) est échangeable.
